# DEMANDE DE BREVET EUROPEEN

(11) **EP 1 650 019 A1**
(43) Date de publication de la demande: **26.04.2006**
(21) Numéro de dépôt: 05292077.4
(22) Date de dépôt: 06.10.2005
(51) Int. Cl.: B32B 1/08, B32B 27/08, B32B 27/30, B32B 27/32, B32B 27/34, B32B 25/08, F16L 11/04

(54) **Tube multicouche PO/adhésif/EVOH/PA/couche de protection**

(30) Priorité: 19.10.2004 FR 0411062
(71) Demandeur: NOBEL PLASTIQUES, 78300 Poissy (FR)
(72) Inventeur: Cheng, Cyrielle, 85160 Saint-Jean de Monts (FR)
(74) Mandataire: Lavialle, Bruno François Stéphane

(57) **Abrégé**

Tube multicouche comportant de l'intérieur vers l'extérieur :
- une couche interne en polyoléfine,
- une première couche intermédiaire à base d'adhésif,
- une deuxième couche intermédiaire en éthylène vinylidène alcool,
- une troisième couche intermédiaire en polyamide,
- une couche externe de protection.

## Description

La présente invention concerne un tube multicouche, plus particulièrement destiné au transport dé carburant dans les circuits d'alimentation des motorisations de véhicules automobiles.

### ARRIERE PLAN DE L'INVENTION

Habituellement, les tubes multicouche utilisés pour le transport de carburant comprennent une couche interne en polyamide qui possède de relativement bonnes propriétés barrière au carburant. Toutefois, les polyamides ont l'inconvénient de se dégrader au contact du carburant en libérant des oligomères qui polluent le carburant et pourraient endommager des éléments de la motorisation situés en aval du tube.

Il est connu également des tubes multicouches comportant une couche interne en un thermoplastique fluoré. Ces thermoplastiques présentent de bonnes propriétés barrière. Toutefois, ces matériaux sont assez coûteux.

L'industrie automobile recherche donc de nouvelles structures de tubes multicouches utilisables pour le transport de carburant qui présenteraient une basse perméabilité au carburant afin de réduire les émissions de polluant tout en étant résistants au carburant et relativement peu coûteux.

### OBJET DE L'INVENTION

Un but de l'invention est de répondre à cette problématique en proposant une nouvelle structure de tube pour le transport de fluides automobiles et plus particulièrement pour le transport de carburant, qui présente une bonne résistance au fluide et une basse perméabilité afin de réduire l'émission de polluant, et qui soit en outre relativement peu coûteux.

### BREVE DESCRIPTION DE L'INVENTION

A cet effet, on prévoit, selon l'invention, un tube multicouche comportant de l'intérieur vers l'extérieur :
- une couche interne en polyoléfine,
- une première couche intermédiaire à base d'adhésif,
- une deuxième couche intermédiaire en éthylène vinylidène alcool,
- une troisième couche intermédiaire en polyamide,
- une couche externe de protection.

La couche en polyoléfine ne se dégrade sensiblement pas au contact du carburant de sorte qu'il n'y a pas d'oligomères libérés dans le fluide transporté. La couche en polyoléfine est en outre relativement peu coûteuse. La couche d'éthylène-vinylidène-alcool et possède des propriétés barrière aux hydrocarbures. Cette matière est en outre moins chère que les matières à base de fluor utilisées précédemment pour leur fonction barrière. La couche de polyamide présente une bonne résistance chimique et mécanique et possède en outre une relativement basse perméabilité aux hydrocarbures. La couche externe est agencée pour assurer une protection des autres couches contre les agressions extérieures intervenant dans l'environnement dans lequel est utilisé le tube. Pour une utilisation automobile, la couche externe est ainsi agencée pour présenter une bonne résistance mécanique et une bonne résistance chimique aux fluides circulant dans l'environnement du moteur, comme les huiles, le liquide lave-vitres, le liquide de refroidissement, le liquide de freins... ainsi qu'aux produits tels que le chlorure de zinc ou le chlorure de sodium utilisés notamment pour l'entretien des routes.

D'autres caractéristiques et avantages de l'invention ressortiront à la lecture de la description qui suit d'un mode de réalisation particulier non limitatif de l'invention.

### BREVE DESCRIPTION DES DESSINS

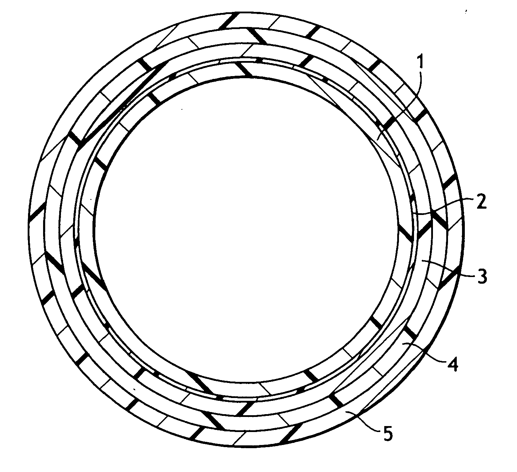

Il sera fait référence à la figure unique représentant en coupe transversale un tube conforme à l'invention.

### DESCRIPTION DETAILLEE DE L'INVENTION

En référence à la figure, le tube conforme à l'invention comprend, de l'intérieur vers l'extérieur :
- une couche interne 1,
- une première couche intermédiaire 2,
- une deuxième couche intermédiaire 3,
- une troisième couche intermédiaire 4,
- une couche de protection 5.

La couche interne 1 est réalisée en polyoléfine. La couche interne 1 est ici en polyéthylène mais peut être également en une autre polyoléfine telle que le polypropylène ou un mélange de polyoléfines.

La couche intermédiaire 2 est réalisée en un liant ou adhésif compatible avec les matériaux de la couche interne 1 et la couche intermédiaire 3. L'adhésif ici employé est ici un mélange de polyoléfine et de polyamide tel que celui produit sous la marque ORGALLOY par la société ATOFINA. La couche intermédiaire 1 assure ici une liaison résistante de la couche interne 1 à la couche intermédiaire 3.

La couche intermédiaire 3 est réalisée en éthylène-vinylidène-alcool (EVOH).

La couche intermédiaire 4 est à base de polyamide et plus particulièrement ici un polyamide 6-12. Le polyamide utilisé pourrait également être un autre polyamide tel qu'un polyamide 6 ou 12.

La couche de protection 5 est ici réalisée en un élastomère thermoplastique et plus particulièrement en un élastomère thermoplastique à base de polypropylène et d'éthylène-propylène-diène monomère (PP-EPDM). La couche de protection peut également être un autre matériau et notamment en polyester. Le polyester utilisé est par exemple le polybutylène térephtalate. Parmi les autres matériaux utilisables pour la couche externe, figurent également les polyoléfines comme le polypropylène.

Bien entendu, l'invention n'est pas limitée au mode de réalisation décrit et on peut y apporter des variantes de réalisation sans sortir du cadre de l'invention tel que défini par les revendications.

En particulier, une couche d'adhésif peut être disposée entre la couche de polyamide et la couche externe de protection lorsque les contraintes auxquelles le tube est destiné à être soumis nécessitent que la liaison entre ces deux couches soit renforcée.

En outre, la couche externe peut être en un autre matériau que ceux décrits et notamment en un élastomère thermoplastique comportant ou constitué de l'un des matériaux suivants :
- polyester-éther,
- polyéther-ester,
- styrène-éthylène-butadilène-styrène (SEBS).

Par ailleurs, le tube de l'invention n'est pas limité à une application automobile.

## Revendications

1. Tube multicouche comportant de l'intérieur vers l'extérieur :
- une couche interne en polyoléfine,
- une première couche intermédiaire à base d'adhésif,
- une deuxième couche intermédiaire en éthylène vinylidène alcool,
- une troisième couche intermédiaire en polyamide,
- une couche externe de protection.

2. Tube selon la revendication 1, **caractérisé en ce que** la polyoléfine de la couche interne est le polyéthylène.

3. Tube selon la revendication 1, **caractérisé en ce que** la polyoléfine de la couche interne est le polypropylène.

4. Tube selon la revendication 1, **caractérisé en ce que** le polyamide de la troisième couche intermédiaire est le polyamide 6-12.

5. Tube selon la revendication 1, **caractérisé en ce que** la couche externe de protection est en un élastomère thermoplastique.

6. Tube selon la revendication 5, **caractérisé en ce que** l'élastomère est à base de polypropylène et d'éthylène-propylène-diène monomère.

7. Tube selon la revendication 5, **caractérisé en ce que** l'élastomère comprend un polyester-éther.

8. Tube selon la revendication 5, **caractérisé en ce que** l'élastomère comprend un polyéther-ester.

9. Tube selon la revendication 5, **caractérisé en ce que** l'élastomère comprend un styrène-éthylène-butadiène-styrène.

10. Tube selon la revendication 1, **caractérisé en ce que** la couche externe est en polyester.

11. Tube selon la revendication 10, **caractérisé en ce que** le polyester est un polybutylène théréphtalate.

12. Tube selon la revendication 1, **caractérisé en ce que** la couche externe de protection est en polyoléfine.

13. Tube selon la revendication 12, **caractérisé en ce que** la polyoléfine de la couche externe est un polypropylène.
